# EUROPEAN PATENT APPLICATION

(11) **EP 4 823 077 A1**
(43) Date of publication of application: **14.10.2026**
(21) Application number: 26165789.4
(22) Date of filing: 18.03.2026
(51) Int. Cl.: H04L 69/28, H04L 1/1867, H04L 47/12, H04L 69/40

(54) **CANBUS COMMUNICATION SYSTEM AND RETRY CONTROL METHOD**

(30) Priority: 09.04.2025 TW 114113309
(71) Applicant: Pegatron Corporation, Taipei City 112 (TW)
(72) Inventor: TANG, Chieh-Hsiang, Taipei City 112 (TW)
(74) Representative: Haseltine Lake Kempner LLP

(57) **Abstract**

A controller area network bus (CANBUS) communication system (10) and a retry control method, the method includes: setting a preset time and retransmission strategy through first device (100), the retransmission strategy including multiple transmission times and multiple timeout intervals corresponding to the transmission times, the timeout intervals are different from each other; sending a transmission request to a second device (200) through first device (100); determining whether a reply corresponding to the transmission request is received within a current timeout interval corresponding to a current transmission time based on the retransmission strategy through first device (100); in response to not receiving the reply within the current timeout interval, determining through first device (100) whether the current transmission time is less than the preset time; and in response to the current transmission time being less than the preset time, retransmitting the transmission request to second device (200) through first device (100).

## Description

### BACKGROUND

### Technical Field

The disclosure relates to a controller area network (CAN) bus, and particularly relates to a controller area network bus (CANBUS) communication system and a retry control method.

### Related Art

In current controller area network bus technology, after a master device sends a transmission request to a slave device, if the master device does not receive a reply (response) corresponding to the transmission request from the slave device within a timeout interval, the master device may retransmit the transmission request until receiving a reply or until the time of retransmitting the transmission request reaches a preset value.

Generally, the master device usually adopts a fixed interval retransmission mechanism. Each time after sending a transmission request to a slave device, the master device may monitor whether a corresponding reply is received within a fixed timeout interval. However, the length of this fixed timeout interval is limited and cannot provide sufficient recovery time for the slave device and/or the controller area network bus, and retransmitting transmission requests multiple times within a short time may also cause heavy load, which may lead to problems of system crash and/or data loss.

### SUMMARY

In view of above, the disclosure provides a controller area network bus (CANBUS) communication system and a retry control method, which may dynamically adjust the length of the timeout interval, thereby improving the stability of the controller area network bus communication system.

The controller area network bus communication system of the disclosure includes a first device and a second device. The second device is connected to the first device through a controller area network bus. The first device sets a preset time and a retransmission strategy, the retransmission strategy includes multiple transmission times and a plurality of timeout intervals respectively corresponding to the transmission times, and the timeout intervals are different from each other. The first device sends a transmission request to the second device. Based on the retransmission strategy, the first device determines whether a reply corresponding to the transmission request is received within a current timeout interval corresponding to a current transmission time. In response to not receiving the reply within the current timeout interval, the first device determines whether the current transmission time is less than the preset time. In response to the current transmission time being less than the preset time, the first device retransmits the transmission request to the second device.

The retry control method of the disclosure is for a controller area network bus communication system, in which the controller area network bus communication system includes a first device and a second device. The second device is connected to the first device through a controller area network bus. The retry control method includes the steps of: setting a preset time and a retransmission strategy through the first device, in which the retransmission strategy includes a plurality of transmission times and a plurality of timeout intervals respectively corresponding to the transmission times, and the timeout intervals are different from each other; sending a transmission request to the second device through the first device; determining whether a reply corresponding to the transmission request is received within a current timeout interval corresponding to a current transmission time based on the retransmission strategy through the first device; in response to not receiving the reply within the current timeout interval, determining through the first device whether the current transmission time is less than the preset time; and in response to the current transmission time being less than the preset time, retransmitting the transmission request to the second device through the first device.

Based on the above, the controller area network bus communication system and the retry control method of the disclosure may set a preset time and a retransmission strategy to dynamically adjust the length of the timeout interval, thereby improving the stability of the controller area network bus communication system.

To make the foregoing features and advantages of the disclosure more comprehensible, embodiments are specifically provided below and described in detail with the accompanying drawings as follows.

### BRIEF DESCRIPTION OF THE DRAWINGS

FIG. 1 is a schematic diagram illustrating a controller area network bus (CANBUS) communication system according to an embodiment of the disclosure;
FIG. 2 is a timing schematic diagram of a conventional method for managing a controller area network bus communication system;
FIG. 3 is a timing schematic diagram illustrating management of a controller area network bus communication system according to an embodiment of the disclosure; and
FIG. 4 is a flowchart of a retry control method according to an embodiment of the disclosure.

### DESCRIPTION OF THE EMBODIMENTS

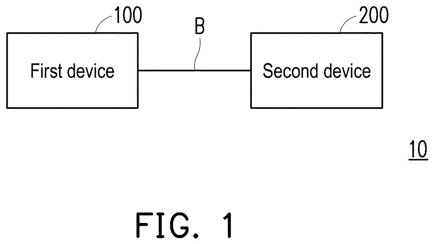

FIG. 1 is a schematic diagram illustrating a controller area network bus (CANBUS) communication system according to an embodiment of the disclosure. Please refer to FIG. 1. A controller area network bus communication system 10 may include a first device 100 and a second device 200. The first device 100 is connected to the second device 200 through a controller area network bus B. In the present embodiment, the first device 100 may be, for example, a data (or signal) transmitting end, also called a Master device. The second device 200 may be, for example, a data (or signal) receiving end, also called a Slave device. In an embodiment, the controller area network bus communication system 10 may be, for example, applied to a vehicle system.

The first device 100 (or the second device 200) may have a processing unit (for example, a processor, but the disclosure is not limited thereto), a communication unit (for example, various communication chips, mobile communication chips, Bluetooth chips, WiFi chips, but the disclosure is not limited thereto), and a storage unit (for example, removable random access memory, flash memory, hard disk, but the disclosure is not limited thereto) and other necessary components for operating the first device 100 (or the second device 200). The first device 100 (or the second device 200) may further include logic circuits having specific functions. For example, the first device 100 may include a timer (not shown) for calculating a current transmission time.

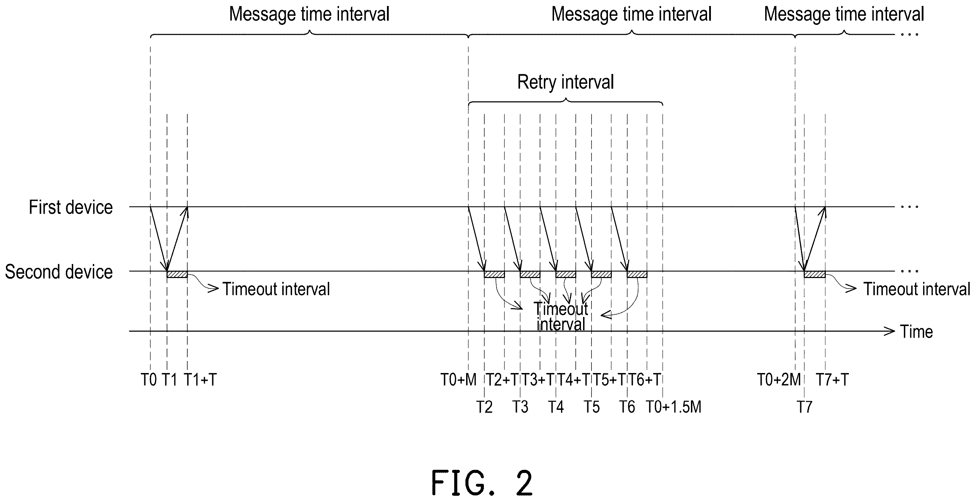

FIG. 2 is a timing schematic diagram of a conventional method for managing a controller area network bus communication system. Please refer to FIG. 2. Generally speaking, in the conventional transmission method, the timing schematic diagram of the first device 100 (that is, the master device) and the second device 200 (that is, the slave device) that perform data (or signal) interaction through the controller area network bus B may be, for example, as shown in FIG. 2. In FIG. 2, the length of the Message Time Interval may be, for example, M milliseconds, and the length of the Timeout Interval may be, for example, T milliseconds, where M and T are both positive integers, and M is greater than T. Regarding the values of M and T, they may be, for example, calculated by the first device 100 or designed by the user according to actual requirements, and the disclosure is not limit thereto.

To further explain, the message time interval is configured to indicate time for performing data (or signal) interaction between the first device 100 and the second device 200. The first device 100 may, for example, set the length of the message time interval according to the average time (for example, M milliseconds) for performing single data (or signal) interaction with the second device 200. Additionally, the first device 100 may, for example, determine the timeout interval according to the current usage condition of the controller area network bus communication system 10 (for example, the system load, the degree of noise interference).

First, at a time point T0, the first device 100 may send a transmission request (Request) to the second device 200 to request data (or signal) interaction with the second device 200. It should be noted that after sending the transmission request, the first device 100 monitors whether a reply (Response) corresponding to the transmission request is received within the timeout interval (that is, a time point T1 to a time point T1+T) to determine whether the second device 200 has received the transmission request. Assuming that the second device 200 has received the transmission request, at the time point T1, the second device 200 may send a reply corresponding to the transmission request to the first device 100 to indicate that the first device 100 may start sending the data (or signal) to be transmitted to the second device 200. At this time, as shown in FIG. 2, if the first device 100 has received the reply corresponding to the transmission request within the timeout interval, the first device 100 may perform data (or signal) interaction with the second device 200 before the end of the message time interval (that is, the time point T0 to a time point TO+M).

It should be noted that the time interval in a range of the time point T0 to the time point T1 is extremely short and may be ignored. That is to say, the time point T1 may, for example, be equal to the time point T0.

Thereafter, when the next data (or signal) interaction is to be performed, the first device 100 may send the transmission request to the second device 200 again at the beginning of the next message time interval (that is, the time point TO+M).

Next, the first device 100 monitors whether a reply corresponding to the transmission request is received within the timeout interval (that is, a time point T2 to a time point T2+T). Generally, the reasons why the first device 100 does not receive a reply within the timeout interval may, for example, be that the second device 200 is in a busy state, severe noise interference on the controller area network bus B causes the second device 200 to fail to receive the transmission request, or the first device 100 cannot receive the reply. In this regard, if the first device 100 does not receive a reply corresponding to the transmission request within the timeout interval, the first device 100 may retransmit the transmission request.

However, frequent sending of transmission requests may cause overloading of the controller area network bus communication system 10, thereby resulting in system crash problems. Accordingly, in conventional practices, the first device 100 may, for example, set a retransmission upper limit time (for example, 4 times).

As shown in FIG. 2, if the first device 100 does not receive a reply within the timeout interval, then at the time point T2+T, the first device 100 retransmits the transmission request to the second device 200 and monitors whether a reply is received within the timeout interval (that is, a time point T3 to a time point T3+T), at which time the retransmission time is 1. However, the first device 100 still does not receive a reply within the timeout interval, so at the time point T3+T, the first device 100 retransmits the transmission request to the second device 200 again, at which time the retransmission time is 2. The first device 100 still does not receive a reply within the timeout interval (that is, a time point T4 to a time point T4+T), so at the time point T4+T, the first device 100 retransmits the transmission request to the second device 200 again, at which time the retransmission time is 3. Finally, the first device 100 still does not receive a reply within the timeout interval (that is, a time point T5 to a time point T5+T), so at the time point T5+T, the first device 100 may send the last transmission request to the second device 200, at which time the retransmission time is 4, reaching the retransmission upper limit time. As shown in FIG. 2, the first device 100 still does not receive a reply corresponding to the last transmission request within the timeout interval (that is, a time point T6 to a time point T6+T). Accordingly, during this message time interval (that is, the time point TO+M to a time point T0+2M), the first device 100 may temporarily not perform data (or message) interaction with the second device 200, and at the beginning of the next message time interval (that is, the time point T0+2M), send the transmission request to the second device 200 again, and in response to the first device 100 receiving a reply within the timeout interval (that is, a time point T7 to a time point T7+T), perform data (or message) interaction with the second device 200.

It should be noted that the time interval between the time point TO+M (or the time point T0+2M) and the time point T2 (or the time point T7) is extremely short and may be ignored. That is, the time point TO+M (or the time point T0+2M) may, for example, be equal to the time point T2 (or the time point T7). In addition, the time interval between the time point T2+T (or the time point T3+T, the time point T4+T, the time point T5+T) and the time point T3 (or the time point T4, the time point T5, the time point T6) is extremely short and may be ignored. That is, the time point T2+T (or the time point T3+T, the time point T4+T, the time point T5+T) may, for example, be equal to the time point T3 (or the time point T4, the time point T5, the time point T6). Furthermore, in certain conditions, the time interval between the time point T6+T and the time point T0+1.5M is extremely short and may be ignored. That is, the time point T6+T may, for example, be equal to the time point T0+1.5M.

It is worth mentioning that the retry interval in FIG. 2 is, for example, from time point T0+1M to the time point T0+1.5M. In the conventional approach, as shown in FIG. 2, if no reply to the transmission request is received, the first device 100 may adopt a fixed interval retransmission mechanism within the retry interval (that is, all timeout intervals in FIG. 2 are fixed at T milliseconds), and when the retransmission time reaches the retransmission upper limit time and still no reply is received, suspend data (or message) interaction with the second device 200 within the message time interval.

However, since the fixed interval retransmission mechanism quickly reaches the retransmission upper limit time, if the busy state of the second device 200 and/or the noise interference of the controller area network bus B cannot be rapidly eliminated within a short time, the first device 100 has a greater probability of having to abandon transmission, thereby affecting transmission reliability, and data may be lost.

In view of above, the disclosure provides a retry control method that may dynamically adjust the length of the timeout interval to avoid multiple sending of transmission requests within a short time, thereby causing burden on the controller area network bus B, and giving the second device 200 in a busy state more processing time and/or giving the controller area network bus B more noise elimination time, so as to improve the stability of the controller area network bus communication system 10.

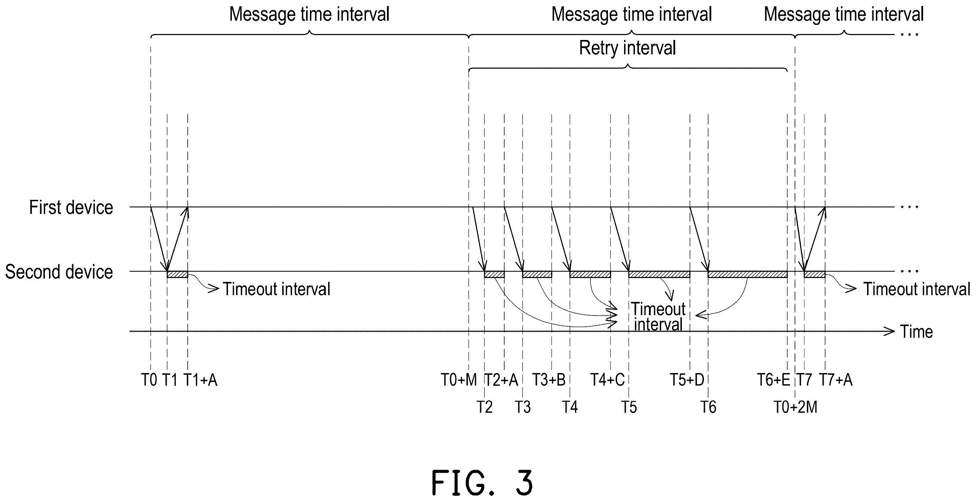

FIG. 3 is a timing diagram illustrating management of a controller area network bus communication system according to an embodiment of the disclosure. Please refer to FIG. 3.

In one embodiment, the first device 100 may set a preset time and a retransmission strategy, in which the retransmission strategy includes a plurality of transmission times and a plurality of timeout intervals respectively corresponding to the transmission times, and each timeout interval is different. Specifically, the first device 100 may set the time of transmissions within one message time interval (that is, the preset time) (for example, 5 times), and set a corresponding timeout interval for each transmission request sent. For example, the first device 100 may set the timeout interval corresponding to a first transmission request sent as A milliseconds. For example, the first device 100 may set the timeout interval corresponding to a second transmission request sent as B milliseconds. For example, the first device 100 may set the timeout interval corresponding to a third transmission request sent as C milliseconds. For example, the first device 100 may set the timeout interval corresponding to a fourth transmission request sent as D milliseconds. For example, the first device 100 may set the timeout interval corresponding to a fifth transmission request sent as E milliseconds.

Further, the length of each timeout interval is positively correlated with a magnitude of the corresponding transmission time thereof. That is, A, B, C, D, E are all positive integers, and E is greater than D, D is greater than C, C is greater than B, and B is greater than A. For example, the first device 100 may randomly generate a plurality of gradually increasing timeout intervals, or the values of A, B, C, D, E form a non-geometric progression.

It should be noted that the aforementioned timeout intervals are correlated with the length of the message time interval (that is, M milliseconds). The first device 100 may, for example, approximate the total length of the multiple timeout intervals to the length of the message time interval to avoid the occurrence of multiple sending of transmission requests within a short time, thereby giving the second device 200 and/or the controller area network bus B sufficient recovery time when the first device 100 does not receive a reply corresponding to the transmission request, so as to improve the stability of the controller area network bus communication system 10.

After disposing the preset time and retransmission strategy, at the time point T0, the first device 100 may send a transmission request to the second device 200 to request data (or signal) interaction with the second device 200. Thereafter, the first device 100 may determine whether a reply corresponding to the transmission request is received within the current timeout interval corresponding to the current transmission time based on the retransmission strategy. Specifically, the transmission request sent at the time point T0 is the first transmission request sent by the first device 100 in this message time interval (that is, from the time point T0 to the time point TO+M), and at this time, the current transmission time is 1. Accordingly, the first device 100 may determine whether a reply corresponding to the transmission request is received within the current timeout interval corresponding to the current transmission time (that is, from the time point T1 to the time point T1+A) based on the retransmission strategy.

As shown in FIG. 3, the first device 100 receives a reply from the second device 200 within the current timeout interval, and therefore, the first device 100 may perform data (or signal) interaction with the second device 200 before the message time interval ends.

Next, at the beginning of the next message time interval (that is, the time point TO+M), the first device 100 may send a transmission request to the second device 200. Similarly, the first device 100 may determine whether a reply corresponding to the transmission request is received within the current timeout interval corresponding to the current transmission time based on the retransmission strategy.

Specifically, the transmission request sent at the time point TO+M is the first transmission request sent by the first device 100 in this message time interval (that is, from the time point TO+M to the time point T0+2M), and at this time, the current transmission time is 1. Accordingly, the first device 100 may determine whether a reply corresponding to the transmission request is received within the current timeout interval corresponding to the current transmission time (that is, from the time point T2 to the time point T2+A) based on the retransmission strategy.

As shown in FIG. 3, since the first device 100 does not receive a reply within the current timeout interval, the first device 100 may further determine whether the current transmission time (that is, 1 time) is less than the preset time (that is, 5 times). At this time, the current transmission time is less than the preset time, the first device 100 may retransmit the transmission request to the second device 200 at the time point T2+A, and determine whether a reply corresponding to the transmission request is received within the current timeout interval corresponding to the current transmission time (that is, 2 times) (that is, from the time point T3 to the time point T3+B) based on the retransmission strategy.

Since the first device 100 does not receive a reply within the current timeout interval, the first device 100 may again determine whether the current transmission time (that is, 2 times) is less than the preset time. At this time, the current transmission time is less than the preset time, the first device 100 may retransmit the transmission request to the second device 200 at the time point T3+B, and determine whether a reply corresponding to the transmission request is received within the current timeout interval corresponding to the current transmission time (that is, 3 times) (that is, from the time point T4 to the time point T4+C) based on the retransmission strategy.

Since the first device 100 does not receive a reply within the current timeout interval, the first device 100 may again determine whether the current transmission time (that is, 3 times) is less than the preset time. At this time, the current transmission time is less than the preset time, the first device 100 may retransmit the transmission request to the second device 200 at the time point T4+C, and determine whether a reply corresponding to the transmission request is received within the current timeout interval corresponding to the current transmission time (that is, 4 times) (that is, from the time point T5 to the time point T5+D) based on the retransmission strategy.

Since the first device 100 does not receive a reply within the current timeout interval, the first device 100 may again determine whether the current transmission time (that is, 4 times) is less than the preset time. At this time, the current transmission time is less than the preset time, the first device 100 may retransmit the transmission request to the second device 200 at the time point T5+D, and determine whether a reply corresponding to the transmission request is received within the current timeout interval corresponding to the current transmission time (that is, 5 times) (that is, from the time point T6 to the time point T6+E) based on the retransmission strategy.

Since the first device 100 does not receive a reply within the current timeout interval, the first device 100 may again determine whether the current transmission time (that is, 5 times) is less than the preset time. At this time, the current transmission time reaches the preset time (that is, 5 times), the first device 100 does not send the transmission request to the second device 200. That is, if the first device 100 transmits the transmission requests for 5 times and does not receive corresponding replies, it is indicated that the busy state of the second device 200 and/or the noise interference on the controller area network bus B is severe, the first device 100 may stop sending transmission requests to the second device 200.

Thereafter, the first device 100 may send the transmission request to the second device 200 again at the beginning of the next message time interval (that is, the time point T0+2M), and determine whether a reply corresponding to the transmission request is received within the current timeout interval corresponding to the current transmission time (that is, 1 time) (that is, from the time point T7 to the time point T7+A) based on the retransmission strategy. As shown in FIG. 3, the first device 100 receives a reply within the current timeout interval and may interact data (or message) with the second device 200.

It should be noted that, in one embodiment, the time interval between the time point T0 (or the time point TO+M, the time point T0+2M) and the time point T1 (or the time point T2, the time point T7) is extremely short and may be ignored. That is, the time point T0 (or the time point TO+M, the time point T0+2M) may, for example, be equal to the time point T1 (or the time point T2, the time point T7). In addition, in one embodiment, the time interval between the time point T2+A (or the time point T3+B, the time point T4+C, the time point T5+D, the time point T6+E) and the time point T3 (or the time point T4, the time point T5, the time point T6, the time point T0+2M) is extremely short and may be ignored. That is, the time point T2+A (or the time point T3+B, the time point T4+C, the time point T5+D, the time point T6+E) may, for example, be equal to the time point T3 (or the time point T4, the time point T5, the time point T6, the time point T0+2M).

According to the above, the retry control method provided by the embodiment of the disclosure may dynamically adjust the length of the timeout interval to avoid unnecessary system load increased by multiple transmissions of transmission requests within a short time. Specifically, the first device 100 may set incremental multiple timeout intervals to give the second device 200 in a busy state more processing time and/or give the controller area network bus B more noise elimination time, so that the first device 100 has a greater probability to perform data (or signal) interaction with the second device 200, thereby effectively improving the stability of the controller area network bus communication system 10.

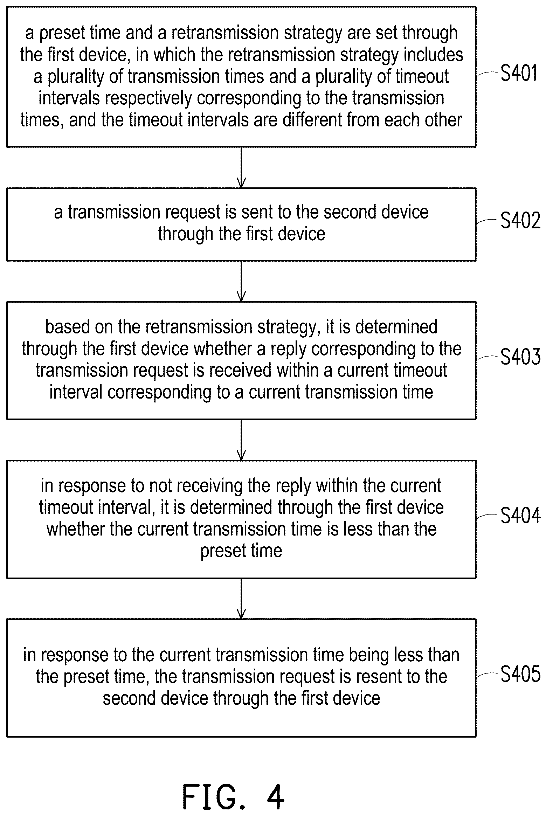

FIG. 4 is a flowchart of a retry control method according to an embodiment of the disclosure, in which the retry control method may be implemented by the controller area network bus communication system 10 as shown in FIG. 1. Please refer to FIG. 1 and FIG. 4 simultaneously. In Step S401, a preset time and a retransmission strategy are set through the first device 100, in which the retransmission strategy includes a plurality of transmission times and a plurality of timeout intervals respectively corresponding to the transmission times, and the timeout intervals are different from each other. In Step S402, a transmission request is sent to the second device 200 through the first device 100. In step S403, based on the retransmission strategy, it is determined through the first device 100 whether a reply corresponding to the transmission request is received within a current timeout interval corresponding to a current transmission time. In Step S404, in response to not receiving the reply within the current timeout interval, it is determined through the first device 100 whether the current transmission time is less than the preset time. In Step S405, in response to the current transmission time being less than the preset time, the transmission request is resent to the second device 200 through the first device 100. Regarding the implementation details of Steps S401 to S405, detailed descriptions have been provided in the aforementioned embodiments, so the content will not be repeated here.

In summary, the embodiments of the disclosure may dispose incremental multiple timeout intervals, which not only avoid unnecessary system load increased by multiple transmissions of transmission requests within a short time, but also provide the slave device in a busy state with more processing time and/or give the controller area network bus more noise elimination time, so that the master device has a greater probability to perform data (or signal) interaction with the slave device, thereby effectively improving the stability of the controller area network bus communication system.

## Claims

1. A controller area network bus communication system (10), comprising:
a first device (100); and
a second device (200) connected to the first device (100) through a controller area network bus (B),
wherein the first device (100) sets a preset time and a retransmission strategy, the retransmission strategy includes a plurality of transmission times and a plurality of timeout intervals respectively corresponding to the transmission times, and the timeout intervals are different from each other,
the first device (100) sends a transmission request to the second device (200),
based on the retransmission strategy, the first device (100) determines whether a reply corresponding to the transmission request is received within a current timeout interval corresponding to a current transmission time,
in response to not receiving the reply within the current timeout interval, the first device (100) determines whether the current transmission time is less than the preset time, and
in response to the current transmission time being less than the preset time, the first device (100) retransmits the transmission request to the second device (200).

2. The controller area network bus communication system (10) as claimed in claim 1, wherein in response to the current transmission time reaching the preset time, the first device (100) does not send the transmission request to the second device (200).

3. The controller area network bus communication system (10) as claimed in claim 1, wherein the timeout intervals are correlated with a message time interval, wherein the message time interval is configured to indicate time for performing data interaction between the first device (100) and the second device (200).

4. The controller area network bus communication system (10) as claimed in claim 1, wherein a length of each of the timeout intervals is positively correlated with a magnitude of a corresponding one of the transmission time thereof.

5. A retry control method for a controller area network bus communication system (10), wherein the controller area network bus communication system (10) includes a first device (100) and a second device (200), the second device (200) is connected to the first device (100) through a controller area network bus (B), and the retry control method comprises the steps of:
setting a preset time and a retransmission strategy through a first device (100), wherein the retransmission strategy includes a plurality of transmission times and a plurality of timeout intervals respectively corresponding to the transmission times, and the timeout intervals are different from each other;
sending a transmission request to a second device (200) through the first device (100);
determining whether a reply corresponding to the transmission request is received within a current timeout interval corresponding to a current transmission time based on the retransmission strategy through the first device (100);
in response to not receiving the reply within the current timeout interval, determining through the first device (100) whether the current transmission time is less than the preset time; and
in response to the current transmission time being less than the preset time, retransmitting the transmission request to the second device (200) through the first device (100).

6. The retry control method as claimed in claim 5, further comprising the step of:
in response to the current transmission time reaching the preset time, not sending the transmission request to the second device (200) through the first device (100).

7. The retry control method as claimed in claim 5, wherein the timeout intervals are correlated with a message time interval, wherein the message time interval is configured to indicate time for performing data interaction between the first device (100) and the second device (200).

8. The retry control method as claimed in claim 5, wherein a length of each of the timeout intervals is positively correlated with a magnitude of a corresponding one of the transmission time thereof.
